# DEMANDE DE BREVET EUROPEEN

(11) **EP 0 585 154 A2**
(43) Date de publication de la demande: **02.03.1994**
(21) Numéro de dépôt: 93401927.4
(22) Date de dépôt: 23.07.1993
(51) Int. Cl.: G05B 19/05

(54) **Dispositif pour l'affichage dynamique d'informations relatives à un système électronique à configuration et/ou à composition variables**

(30) Priorité: 31.07.1992 FR 9209737
(71) Demandeur: SEXTANT AVIONIQUE, F-92366 Meudon la Forêt Cédex (FR)
(72) Inventeur: Poulachon, Daniel, F-78340 Les Clayes sous Bois (FR)
(74) Mandataire: de Saint-Palais, Arnaud Marie

(57) **Abrégé**

Le dispositif fait intervenir, d'une part, un module autonome d'affichage (5) comprenant, monté dans un support de faibles dimensions, un circuit d'affichage comprenant un afficheur (6), de préférence de type à cristaux liquides, piloté par un contrôleur d'affichage (7) couplé à une mémoire d'état (8) et une source d'énergie renouvelable (9) connectée au circuit d'affichage et, d'autre part, des moyens d'élaboration par ledit système de données numériques le caractérisant, tant sur le plan matériel que sur le plan logiciel, ainsi que des moyens permettant de transmettre lesdites données dans ladite mémoire d'état (8), en vue de leur affichage sur ledit afficheur (6).

Le dispositif s'applique notamment à l'électronique modulaire utilisée en aéronautique.

## Description

La présente invention concerne un dispositif pour l'affichage dynamique d'informations relatives à un produit tel que, par exemple, un système électronique à configuration et/ou à composition variables.

D'une manière générale, on constate que l'évolution rapide des matériels et des logiciels ainsi que le développement de nombreuses versions dérivées d'une même souche matérielle et/ou logicielle, rendent la gestion des produits de plus en plus difficile et coûteuse et multiplient les risques d'erreur.

Ces problèmes se posent d'une façon particulièrement aiguë dans le cas de l'électronique modulaire dont l'emploi tend à se généraliser, notamment dans l'aéronautique.

En effet, dans ce cas, le problème se pose non seulement au niveau de chacun des modules électroniques mais également au niveau des unités renfermant ces différents modules.

L'invention a donc plus particulièrement pour but de résoudre ces problèmes de manière à faire en sorte que tous les modules utilisés dans une unité ainsi que cette dernière puissent être identifiés et qu'à chaque mise en service, on puisse vérifier la compatibilité des fonctions réalisées par les modules et s'assurer que la mise en place d'un nouveau module n'aura pas d'effet nuisible.

A cet effet, elle propose un dispositif autonome permettant d'effectuer un affichage automatique des informations relatives au système auquel il se trouve associé ainsi qu'une mise à jour automatique de cet affichage, et ce, sans aucune intervention de l'utilisateur : Cet affichage est notamment destiné à indiquer, sans risque d'erreur, l'état d'évolution de ce système, tant en ce qui concerne le matériel que le logiciel.

Selon l'invention, ce dispositif fait intervenir, d'une part, un module autonome d'affichage comprenant, monté dans un support de faibles dimensions, un circuit d'affichage comprenant un afficheur de préférence de type à cristaux liquides, piloté par un contrôleur d'affichage couplé à une mémoire d'état, une source d'énergie renouvelable connectée au circuit d'affichage par l'intermédiaire d'un circuit de commutation et, d'autre part, des moyens d'élaboration par ledit système de données numériques le caractérisant, tant sur le plan matériel que sur le plan logiciel, ainsi que des moyens permettant de transmettre lesdites données dans ladite mémoire d'état, en vue de leur affichage sur ledit afficheur.

Avantageusement, le susdit système est conçu de manière à transmettre les susdites données à la mémoire d'état lors de chaque opération de téléchargement qu'il subit, ces données étant par ailleurs remises à jour à chacune des modifications, sur le plan matériel, du système. Dans ce cas, le dispositif selon l'invention pourra en outre comprendre des moyens de commutation permettant d'alimenter le module autonome uniquement pendant les phases de téléchargement.

Par ailleurs, le susdit module autonome pourra présenter des fonctions complémentaires telles que, par exemple, le comptage du temps d'utilisation du système.

Dans ce cas, le module pourra comprendre un détecteur de présence de la tension d'alimentation du système et un compteur conçu de manière à compter les impulsions d'une horloge, pendant tout le temps où ledit détecteur décèle la présente de ladite tension.

Selon une autre particularité de l'invention, dans le cas où le système comprend plusieurs modules électroniques amovibles, chacun des modules pourra comprendre un module d'affichage local respectif. Dans ce cas, ces différents modules locaux pourront être connectés à un module d'affichage central spécifique de l'ensemble du système comprenant des moyens de scrutation des mémoires d'état des différents modules locaux ainsi qu'une table de correspondance, gérée par microprocesseur, qui permet de déduire des informations d'identification du système en fonction de la combinaison de données enregistrées dans les mémoires d'état des modules locaux. Bien entendu, à partir de cette table de correspondance, le microprocesseur pourra détecter les anomalies et, en particulier, les configurations interdites.

Des modes d'exécution de l'invention seront décrits ci-après, à titre d'exemples non limitatifs, avec référence aux dessins annexés dans lesquels :
La figure 1 est un schéma synoptique illustrant le principe du dispositif d'affichage selon l'invention ;
La figure 2 est une représentation schématique d'un calculateur dont la structure se présente sous la forme d'une baie dans laquelle sont engagés trois modules de calcul, à la façon de tiroirs ;
La figure 3 est un schéma synoptique illustrant un mode de connexion, par l'intermédiaire d'un bus de configuration, des modules d'affichage associés aux modules de calcul et à la structure du calculateur représenté figure 2.

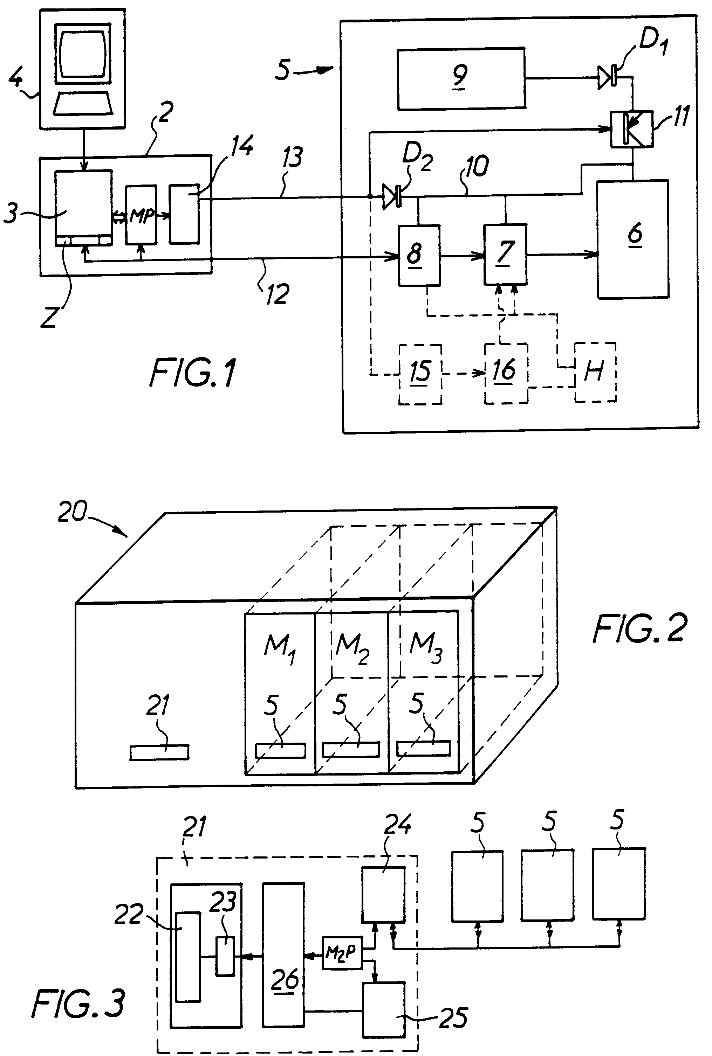

Le dispositif d'affichage, illustré figure 1, équipe un module électronique schématisé par le bloc 2 dont la mémoire 3 peut être téléchargée par un programme applicatif, grâce à une unité de commande 4 schématiquement représentée par une console clavier/écran.

Ce dispositif d'affichage fait intervenir un module d'affichage 5 monté dans un support plat qui est fixé à demeure sur le boîtier du module électronique 2.

Les dimensions et les fonctions de ce module d'affichage sont telles qu'il est assimilable à une étiquette destinée à recevoir des informations d'identification du module électronique.

A cet effet, le module d'affichage 5 comprend un afficheur de type à cristaux liquides 6 piloté de façon classique par un contrôleur d'affichage 7.

Ce contrôleur d'affichage 7 est lui-même connecté à une mémoire d'état 8, par exemple de type EEPROM ou analogue, sur laquelle les données relatives à l'identification du module électronique 2 peuvent être mémorisées ou conservées même en cas d'interruption de l'alimentation, en vue d'être affichées sur l'afficheur 6.

En vue d'assurer son autonomie énergétique, le module d'affichage 5 comprend une cellule photovoltaïque 9 reliée au circuit d'alimentation 10 de l'afficheur 6, du contrôleur 7 et de la mémoire 8 par l'intermédiaire d'une diode D₁ et d'un interrupteur électriquement commandable 11 (schématisé par un transistor) dont le rôle sera décrit dans la suite de la description.

Les connexions entre le module d'affichage 5 et le module électronique 2 font intervenir, d'une part, une liaison bidirectionnelle 12 entre la mémoire d'état 8 et le microprocesseur MP associé à la mémoire 3 du module électronique 2 à contrôler et, d'autre part, un circuit d'alimentation 13 reliant le circuit d'alimentation 10 du module d'affichage 5 au circuit d'alimentation du module électronique 2, par l'intermédiaire d'un commutateur 14 interne au module 2, commandé par le microprocesseur MP et une diode D2 interne au module 5.

Le fonctionnement du dispositif précédemment décrit est alors le suivant :

Lors d'un téléchargement de la mémoire 3 du module électronique 2 par le processeur 4, le commutateur 14 est commandé de manière à assurer la connexion du circuit d'alimentation du module électronique 2 avec le module d'affichage 5, au travers de la diode D2. La présence de la tension d'alimentation à l'entrée de la diode D2 provoque alors une commutation de l'interrupteur 11 qui isole la cellule photovoltaïque 9 du circuit d'alimentation 10 du module 5.

Au cours du téléchargement, (de préférence à la fin), le processeur 4 déclenche une routine de transfert, dans la mémoire d'état 8, des données d'identification du module électronique 2 et du programme applicatif objet du téléchargement, qui se trouvent alors contenues dans des zones déterminées Z de l'espace mémoire alloué au module 2.

La routine de transfert des données peut être également déclenchée chaque fois que la configuration matérielle du module électronique 2 est modifiée, les données relatives à ces configurations matérielles pouvant alors être contenues par des mémoires programmables associées à chacun des éléments interchangeables du module électronique 2 et qui font partie de l'espace mémoire alloué à ce module électronique 2.

En pratique, le contrôleur d'affichage 7 fait intervenir un microprocesseur de petite taille associé à un circuit d'horloge.

Il est clair qu'une telle structure (microprocesseur-mémoire-afficheur) peut être utilisée pour assurer d'autres prestations.

Ainsi, par exemple, cette structure pourra effectuer un comptage du temps d'utilisation du module électronique 2 et comprendre, comme représenté en traits interrompus sur la figure 1 :
- un détecteur 15 de présence de la tension d'alimentation du module électronique 2,
- un compteur 16 apte à effectuer un comptage des impulsions délivrées par l'horloge H associée au microprocesseur, ce compteur 16 étant déclenché par le détecteur 15 lorsque le détecteur signale la présence de la tension d'alimentation, et
- des moyens de conversion éventuels (non représentés) permettant un affichage en jours, heures, minutes du contenu du compteur.

La détection de la présence de la tension d'alimentation du module électronique 2 peut s'effectuer par le circuit d'alimentation 12, une absence de tension sur ce circuit 12 signifiant l'arrêt dudit module.

Bien entendu, cette détection pourrait faire intervenir une liaison électrique supplémentaire entre les modules 2 et 5.

L'invention ne se limite pas au mode d'exécution précédemment décrit. Ainsi, le module d'affichage peut être associé non seulement à des modules électroniques tels que des calculateurs, mais également à des éléments constitutifs ou accessoires de ceux-ci, tels que des cartes électroniques, des modules mémoire, etc...

La figure 2 montre un mode d'application de l'invention à un calculateur 20 se présentant sous la forme d'une baie dans laquelle viennent s'engager, à la façon de tiroirs, des modules électroniques interchangeables M₁, M₂, M₃.

Dans cet exemple, chacun des modules électroniques M₁, M₂, M₃ porte sur sa face frontale un module d'affichage 5 tel que celui précédemment décrit.

De même, le calculateur 20 comprend, monté sur sa face frontale, un module d'affichage 21 de structure similaire à celle des modules 5, mais dont le rôle est d'indiquer la configuration du calculateur 20 en fonction de la nature des modules électroniques M₁, M₂, M₃ qui lui sont connectés et de vérifier avant sa mise en service que cette configuration est autorisée.

Ce module d'affichage 21 peut comprendre, comme indiqué sur la figure 3, un afficheur 22 dont le contrôleur d'affichage 23 est relié à deux mémoires 24, 25 destinées à contenir respectivement, d'une part, pour ce qui concerne la mémoire 24, les données d'identification contenues dans les mémoires d'état des modules d'affichage 5 associés aux modules électroniques M₁, M₂, M₃ et, d'autre part, pour ce qui concerne la mémoire 25, les données d'identification du matériel et/ou du logiciel installé à demeure dans la baie du calculateur 20.

Les transferts de données entre ces mémoires 24, 25 et les mémoires d'état 5 des modules 5 sont gérés par le microprocesseur M2P du module d'affichage 21 qui scrute en permanence les mémoires d'état des étiquettes et qui, grâce à une table de correspondance 26, détermine la configuration du calculateur 20 en fonction des données d'identification logicielle et matérielle de tous les modules M₁, M₂, M₃. Cette détermination peut être effectuée de façon classique par recherche de coïncidence entre un mot d'état des modules et un mot de configuration de la table.

La liaison entre les modules d'affichage M₁, M₂, M₃ s'effectue par exemple grâce à un bus de configuration de type série.

Bien entendu, dans le cas où la configuration déterminée par le microprocesseur M2P à partir des données contenues dans les modules d'affichage 5 est absente de la table de correspondance 26 ou est réputée interdite, le microprocesseur M2P commande alors l'affichage d'un message d'erreur.

Dans le cas d'une configuration incomplète, le microprocesseur M2P peut en outre indiquer les références du module qui manque.

Le dispositif précédemment décrit s'applique d'une façon particulièrement avantageuse aux calculateurs embarqués à bord d'un aéronef. Dans ce cas, il pourra indiquer le nom abrégé du calculateur ainsi que son état d'évolution matérielle et logicielle.

Il peut en outre s'appliquer à l'affichage des références matérielles et logicielles de modules mémoire sans processeur de traitement intégré mais connecté à celui-ci par une interface électrique.

## Revendications

1. Dispositif pour l'affichage dynamique d'informations relatives à un système électronique,
caractérisé en ce qu'il fait intervenir, d'une part, un module autonome d'affichage (5) comprenant, monté dans un support de faibles dimensions, un circuit d'affichage comprenant un afficheur (6) de préférence de type à cristaux liquides, piloté par un contrôleur d'affichage (7) couplé à une mémoire d'état (8), une source d'énergie renouvelable (9) connectée au circuit d'affichage et, d'autre part, des moyens d'élaboration par ledit système de données numériques le caractérisant, tant sur le plan matériel que sur le plan logiciel, ainsi que des moyens permettant de transmettre lesdites données dans ladite mémoire d'état (8), en vue de leur affichage sur ledit afficheur (6).

2. Dispositif selon la revendication 1,
caractérisé en ce que le susdit système comprend une mémoire (3) pouvant être téléchargée par un programme applicatif, ainsi que des moyens permettant de transmettre les susdites données à la mémoire d'état (8) lors de chaque opération de téléchargement qu'il subit.

3. Dispositif selon l'une des revendications 1 et 2,
caractérisé en ce qu'il comprend des moyens permettant au susdit système d'effectuer une remise à jour des susdites données présentes dans la mémoire d'état (8) à chacune des modifications matérielles du système.

4. Dispositif selon l'une des revendications précédentes,
caractérisé en ce que la susdite mémoire d'état est du type EEPROM qui conserve les données enregistrées même dans le cas d'une interruption de l'alimentation du module d'affichage (5).

5. Dispositif selon l'une des revendications précédentes,
caractérisé en ce que la susdite source d'énergie renouvelable consiste en une pile photovoltaïque (9).

6. Dispositif selon l'une des revendications précédentes,
caractérisé en ce qu'il comprend des moyens (H, 15, 16) permettant d'effectuer un comptage du temps d'utilisation du système.

7. Dispositif selon la revendication 6,
caractérisé en ce que les susdits moyens comprennent un détecteur (15) de présence de la tension d'alimentation du système et un compteur (16) conçu de manière à compter les impulsions d'une horloge (H), pendant tout le temps où ledit détecteur (15) décèle la présence de ladite tension.

8. Dispositif selon l'une des revendications précédentes,
caractérisé en ce que le système comprend plusieurs modules électroniques amovibles (M₁, M₂, M₃) comprenant chacun un module d'affichage local (5), et en ce que ces modules d'affichage local (5) sont connectés à un module d'affichage central (21) spécifique du système qui comprend des moyens de scrutation des mémoires d'état (8) des différents modules locaux (5), ainsi qu'une table de correspondance (26) gérée par microprocesseur (M2P) qui permet de déduire des informations d'identification du système en fonction de la combinaison des données enregistrées dans les mémoires d'état des modules locaux (5).

9. Dispositif selon la revendication 8,
caractérisé en ce que la susdite table de correspondance (26) est conçue de manière à détecter les anomalies dans les compositions et/ou les configurations du système.
